# FASCICULE DE BREVET EUROPEEN

(11) **EP 1 475 310 B1**
(45) Date de publication et mention de la délivrance du brevet: **16.08.2006**
(21) Numéro de dépôt: 04356065.5
(22) Date de dépôt: 07.05.2004
(51) Int. Cl.: B65D 33/00, B65G 51/06

(54) **Emballage de transport sur réseau pneumatique pour des articles stockés dans une poche perforée**
Verpackung zum pneumatischen Transport für Artikel in einer perforierten Tasche
Packaging for pneumatic transport for articles contained in perforated pockets

(30) Priorité: 07.05.2003 FR 0305583
(43) Date de publication de la demande: 10.11.2004
(73) Titulaire: Decomatic S.A., F-38290 La Verpillière (FR)
(72) Inventeur: Allegre, Jean-Luc, 38460 Chozeau (FR)
(74) Mandataire: Thibault, Jean-Marc

(56) Documents cités:
- EP-A- 0 664 264
- FR-A- 2 749 827
- FR-A- 2 792 674
- US-A- 5 314 251
- US-A1- 2003 016 886

## Description

La présente invention concerne le domaine technique des emballages souples destinés au transport d'articles tels que par exemple des produits pharmaceutiques, des composants électroniques ou de l'argent, à l'intérieur de réseaux pneumatiques.

Dans le domaine préféré de la collecte de fonds, il est connu de mettre en oeuvre un réseau pneumatique comportant plusieurs postes de collecte pour des fonds placés dans un emballage qui sous l'effet de l'air comprimé du réseau est acheminé vers un poste central sécurisé.

Pour remédier aux inconvénients des emballages du type à cartouche cylindrique à couvercle verrouillable, le brevet EP 0 664 264 a proposé un emballage souple de transport présentant un faible prix de revient, apte à pouvoir être jeté après chaque utilisation.

Un tel emballage comprend un sac réalisé en matière plastique soudée dont l'ouverture donnant accès au volume interne est obturable après remplissage, par un volet rabattable pré-encollé. L'une des faces du sac est pourvue d'une pièce fixée par au moins deux côtés aux bords correspondant du sac de manière à former une poche de propulsion de l'emballage par l'air comprimé du réseau pneumatique. La pièce formant la poche est réalisée en matière plastique souple et s'étend sur une partie de la longueur du sac à partir d'une de ses extrémités de sorte que l'ouverture de la poche est parallèle au volet rabattable.

La Déposante a eu le mérite de mettre en évidence qu'il existait le besoin de pouvoir rendre inutilisable les objets contenus à l'intérieur d'un tel emballage en cas de tentative d'effraction du conteneur dans lequel est placé un tel emballage.

L'objet de l'invention vise donc à proposer un emballage conçu pour être déplacé de manière fiable dans un réseau pneumatique tout en étant adapté pour contenir des objets susceptibles d'être rendus de façon certaine, inutilisables en cas d'effraction du conteneur dans lequel l'emballage est placé.

Pour atteindre un tel objectif, l'objet de l'invention concerne un emballage pour le transport d'articles à l'intérieur d'un réseau d'air comprimé, comportant un sac réalisé en matière plastique souple soudée présentant un passage d'accès à son volume interne fermé, obturable par un moyen de fermeture, l'emballage étant pourvu d'au moins une poche réalisée en matière plastique souple et possédant une ouverture s'étendant perpendiculairement à la direction de transport de l'emballage de manière à constituer une poche de propulsion de l'emballage par l'air comprimé du réseau, caractérisé en ce qu'il est pourvu de perforations aménagées pour permettre le passage d'un produit de maculage des articles placés à l'intérieur du sac.

Selon une variante de réalisation, le sac est pourvu d'au moins d'une poche de propulsion, le sac et éventuellement la poche de propulsion étant pourvus des perforations.

Pour favoriser la pénétration du produit de maculage à l'intérieur du sac, au moins une perforation est aménagée à partir d'au moins un bord longitudinal du sac et, éventuellement, de la poche de propulsion.

Selon une variante préférée de réalisation, le sac est pourvu d'au moins une première partie détachable réalisée en matière plastique souple et reliée à un bord transversal du sac par une ligne de découpe, cette partie détachable étant pourvue d'au moins une poche de propulsion.

Selon cette variante préférée de réalisation, la poche de propulsion est réalisée sur une partie détachable enlevée après la phase de transport par le réseau pneumatique.

Selon une forme préférée de réalisation, le sac est pourvu d'une deuxième partie détachable, réalisée en matière plastique souple, reliée par une ligne de découpe à un bord transversal du sac opposé de celui pourvu de la première partie détachable, cette deuxième partie détachable étant pourvue d'au moins une poche de propulsion dont l'ouverture est en opposition par rapport à celle portée par la première partie détachable pour permettre la propulsion de l'emballage selon les deux sens du réseau.

Selon une forme de réalisation, chaque partie détachable est pourvue d'une poche située sur une même face ou sur les deux faces opposées de l'emballage.

Selon une autre forme de réalisation, chaque partie détachable est pourvue de deux poches de propulsion situées sur les deux faces opposées de l'emballage.

Selon une première forme de réalisation de chaque partie détachable, chacune d'entre elles comporte deux parois superposées fermées sur leurs quatre côtés.

Selon cette première forme de réalisation, l'une ou les deux parois de la ou des parties détachables est (sont) pourvue(s) d'une fente formant l'ouverture de la poche de propulsion.

Selon cette première forme de réalisation, l'une ou les deux parois de la ou des parties détachables est (sont) pourvue(s) d'un film de matière plastique souple soudé aux bords longitudinaux et au bord transversal libre de la partie détachable pour constituer une poche de propulsion.

Selon cette première forme de réalisation, les deux parois de la ou des parties détachables sont pourvues d'un film de matière plastique souple replié autour du bord transversal libre des parois en étant soudé au moins sur les bords longitudinaux des parois pour constituer deux poches de propulsion.

Selon une deuxième forme de réalisation de chaque partie détachable, chacune d'entre elles comporte une paroi réalisée par un film en matière plastique souple.

Selon cette deuxième forme de réalisation, l'une ou les deux faces de la paroi constitutive de la ou des parties détachables est (sont) pourvue(s) d'un film de matière plastique souple soudé aux bords longitudinaux et au bord transversal libre de la paroi pour constituer une poche de propulsion.

Selon cette deuxième forme de réalisation, les deux faces de la paroi constitutive de la ou des parties détachables sont pourvues d'un film de matière plastique souple replié autour du bord transversal libre de la paroi en étant soudé au moins sur les bords longitudinaux de la paroi pour constituer deux poches de propulsion.

Avantageusement, chaque poche de propulsion présente au moins un soufflet élargissant son ouverture lors de la propulsion par l'air.

Diverses autres caractéristiques ressortent de la description faite ci-dessous en référence aux dessins annexés qui montrent, à titre d'exemples non limitatifs, des formes de réalisation de l'objet de l'invention.

**La Figure 1** est une vue d'un premier exemple de réalisation pris selon la face recto d'un emballage conforme à l'invention avec fermeture par bande adhésive de sécurité.

**La Figure 2** est une vue d'un autre exemple de réalisation d'un emballage conforme à l'invention pris selon sa face verso.

**Les Figures 3** et **4** sont des vues de profil à grande échelle montrant d'autres exemples de réalisation d'un emballage conforme à l'invention.

**La Figure 5** illustre une autre variante de réalisation d'un emballage conforme à l'invention.

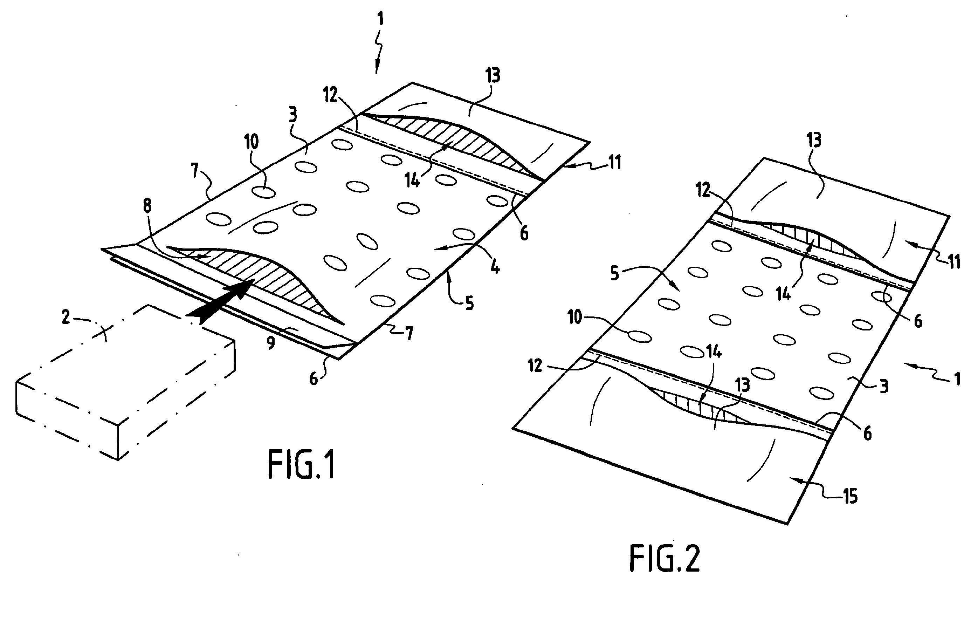

Tel que cela ressort plus précisément de la **Figure 1**, l'objet de l'invention concerne un emballage **1** destiné à contenir des articles de toute nature, tels que par exemple des chèques ou des billets de banque représentés de façon schématique par la référence **2**. Un tel emballage **1** est destiné à être introduit à l'intérieur d'un réseau pneumatique, non représenté, mais connu en soi pour permettre le transport d'un lieu à un autre, de l'article **2** contenu dans l'emballage.

D'une manière connue, l'emballage **1** se présente sous la forme d'un sac **3** réalisé en matière plastique souple, de préférence recyclable, tels qu'en polyéthylène. Le sac **3** possède une face dite recto **4** et une face dite verso **5**, délimitée par deux bords transversaux opposés **6** sensiblement parallèles entre eux et deux bords longitudinaux opposés **7** sensiblement parallèles entre eux. Les côtés **6** sont dits transversaux en considération d'une part, de la forme allongée de l'emballage illustré dans l'exemple de réalisation, et d'autre part, de la direction de circulation de l'emballage à l'intérieur du réseau pneumatique. En d'autres termes, la direction de transport de l'emballage **1** est sensiblement perpendiculaire aux bords transversaux **6**.

Les faces **4, 5** du sac **3** sont réalisées à partir d'une feuille plastique souple repliée ou de deux feuilles plastique souple superposées dont au moins certains des bords sont soudés de manière à délimiter un volume interne fermé accessible par un passage d'accès **8** obturable par un moyen de fermeture **9**. Par convention, la face du sac **3** dans laquelle est aménagé le passage d'accès **8** est la face recto **4**.

Bien entendu, le passage d'accès **8** est adapté pour permettre l'introduction de l'article **2** à l'intérieur du volume interne du sac **3.** Il est à noter que dans l'exemple illustré à la **Figure 1,** le passage d'accès **8** est réalisé à proximité d'un bord transversal **6** du sac **3** en étant orienté parallèlement audit bord transversal **6.** Le passage d'accès **8** est obturé par exemple par une bande adhésive de sécurité **9** de tout type connu constituant un témoin d'inviolabilité. Même si dans les exemples de réalisation illustrés, le passage d'accès **8** est représenté parallèlement aux bords transversaux **6**, il est clair qu'un tel passage d'accès **8** peut être réalisé à n'importe quel endroit de l'emballage et être orienté différemment comme par exemple parallèlement aux bords longitudinaux **7**. De même, le passage d'accès **8** peut être aménagé dans la partie médiane du sac **3.**

Conformément à l'invention, le sac **3** est pourvu de perforations **10** aménagées pour permettre le passage d'un produit de maculage des articles **2** placés à l'intérieur du sac **3**. Ainsi, l'une ou les deux faces **4, 5** du sac **3** sont munies de trous ou de perforations **10** aménagés pour permettre la pénétration à l'intérieur du volume interne du sac, d'un produit de maculage tel que de l'encre indélébile rendant ainsi inutilisable les articles **2** placés à l'intérieur du sac **3**. Il est à noter que la diffusion du produit de maculage est effectuée lors par exemple, d'une tentative d'effraction du conteneur dans lequel sont placés les emballages **1**. Cette diffusion est généralement accompagnée d'une explosion qui conduit à détruire partiellement ou totalement le film de l'emballage **1** en matière plastique, ce qui contribue à rendre inutilisable les articles **2** contenus dans l'emballage.

Selon une variante préférée de réalisation de l'invention, le sac **3** est pourvu d'au moins une première partie détachable **11** réalisée en une matière plastique souple et reliée à un bord transversal **6** du sac par une ligne de découpe **12**. Cette première partie détachable **11** est pourvue d'au moins une poche **13** réalisée en matière plastique souple et possédant une ouverture **14** s'étendant perpendiculairement à la direction de transport de l'emballage de manière à constituer une poche de propulsion de l'emballage par l'air comprimé du réseau.

Selon un exemple avantageux de réalisation, chaque poche de propulsion **13** présente au moins un soufflet ou un pli s'ouvrant pour élargir son ouverture **14** lors de la propulsion par l'air.

Il doit être considéré que la ligne de découpe **12** constitue une ligne de moindre résistance mécanique pour permettre le détachement aisé de cette première partie **11** du sac **3.** En effet, il doit être considéré que l'emballage **1** ainsi réalisé permet le transport d'articles 2 placés à l'intérieur du sac de l'emballage qui est adapté pour être transporté dans un réseau pneumatique à l'aide de la poche de propulsion **13**. Après l'extraction de l'emballage **1** du réseau de transport, la première partie **11** peut être détachée du sac **3** de manière à éviter que cette première partie **11** obture les perforations **10** empêchant le passage éventuel d'un produit de maculage à l'intérieur du sac.

Bien entendu, l'enlèvement de la première partie détachable **11** laisse le sac **3** dans une position fermée. A cet égard, la ligne de découpe **12** est réalisée au-delà du bord transversal **6** par rapport au volume interne du sac **3** de manière que ce bord transversal constitue toujours un bord fermé même après le retrait de la première partie détachable **11.** En d'autres termes, lorsqu'un bord transversal 6 est réalisé par une soudure, cette dernière est maintenue intact après l'enlèvement de la partie détachable **11.**

Selon une autre forme de réalisation illustrée à la **Figure 2**, le sac **3** est pourvu d'une deuxième partie détachable **15,** réalisée de manière identique ou non à la première partie détachable **11.** Cette deuxième partie détachable **15** est réalisée en matière plastique souple et se trouve reliée par une ligne de découpe **12** à un bord transversal **6** du sac **3** opposé de celui pourvu de la première partie détachable **11.** Cette deuxième partie détachable **15** est pourvue d'au moins une poche de propulsion **13** dont l'ouverture **14** est en opposition par rapport à celle **13** portée par la première partie détachable **11** pour permettre la propulsion de l'emballage selon les deux sens du réseau pneumatique. Les deux poches **13** situées sur la première **11** et deuxième **15** parties détachables son ainsi placées tête-bêche sur l'emballage **1** illustré à la **Figure 2.**

Dans l'exemple illustré à la **Figure 2**, une poche de propulsion **13** est réalisée sur chacune des parties détachables **11, 15** sur la face verso **5** de l'emballage. Bien entendu, il peut être envisagé qu'une poche de propulsion **13** soit réalisée sur chacune des parties détachables **11, 15,** sur la face recto **4** de l'emballage. De même, il peut être prévu que l'une des poches de propulsion **13** soit réalisée sur la face recto d'une partie détachable tandis que l'autre poche de propulsion **13** soit réalisée sur la face verso de l'autre partie détachable.

Selon une autre forme de réalisation, l'emballage **1** est pourvu d'une deuxième paire de poches **13** placées également tête-bêche, c'est-à-dire que leurs ouvertures **14** se trouvent dirigées en opposition l'une de l'autre. Selon cette variante de réalisation, chaque partie détachable **11, 15** est donc pourvue de deux poches de propulsion **13** orientées dans le même sens et disposées chacune sur une face différente de l'emballage.

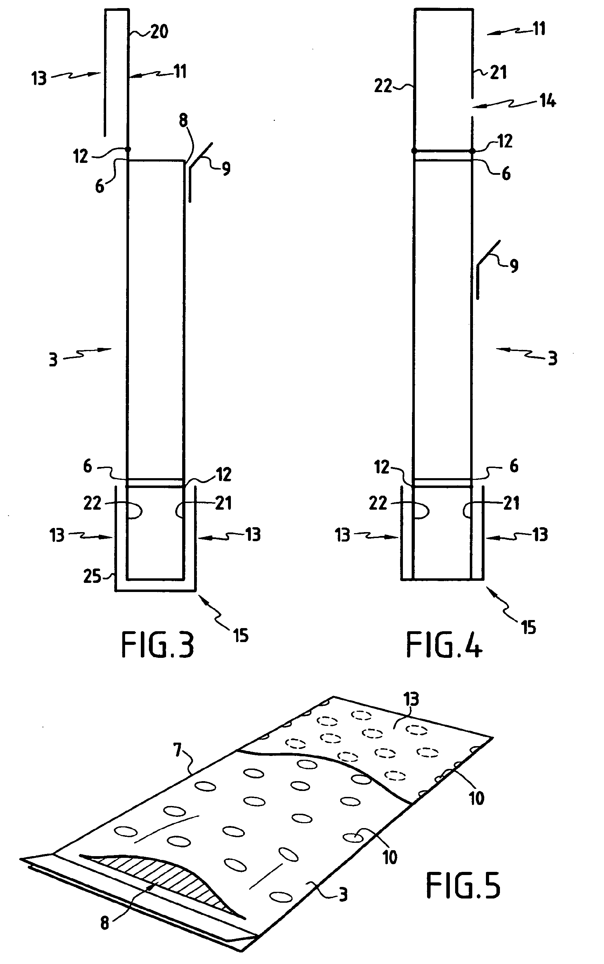

Selon une première forme de réalisation, au moins une partie détachable telle que la première **11** dans l'exemple illustré à la **Figure 3,** comporte une unique paroi **20** réalisée par un film en matière plastique souple. Selon cette forme de réalisation illustrée, cette partie détachable **11** comporte une poche **13** constituée par un film de matière plastique souple tel qu'un film polyéthylène soudé sur un bord transversal de la partie détachable **11** et sur au moins une partie des deux bords longitudinaux de cette partie détachable. Cette poche **13** peut être réalisée par un film rapporté sur la paroi **20** ou par le film constitutif de la paroi **20** replié selon un bord transversal et soudé sur au moins les deux bords longitudinaux.

Selon une autre variante de réalisation pour laquelle une partie détachable est équipée de deux poches de propulsion **13,** il peut être prévu de réaliser ces deux poches **13** par l'intermédiaire d'un film de matière plastique souple replié autour du bord transversal libre de la partie détachable en étant soudé au moins sur les bords longitudinaux de la paroi **20.** De même, ces deux poches **13** peuvent être réalisées par l'intermédiaire de deux films en matière plastique souple soudés sur chacune des faces opposées de l'emballage, selon trois de ses côtés. Il est clair que les deux parties détachables peuvent être réalisées de manière identique ou non aux diverses variantes énoncées ci-dessus.

Selon une autre forme de réalisation illustrée plus particulièrement aux **Figure 3** et **4**, au moins une (**Figure 3**) ou chaque partie détachable **11, 15** (**Figure 4**) comporte deux parois superposées **21, 22,** fermées sur leurs quatre côtés. Ces deux parois **21, 22** sont formées par deux films superposés, fixés au niveau de leurs bords transversaux et longitudinaux ou par un film replié selon un bord transversal opposé de celui fixé à un bord transversal **6** du sac **3**, ce film replié étant fixé sur au moins les deux bords longitudinaux. Selon cette forme de réalisation, l'une des parois ou les deux parois **21, 22** d'au moins une ou des deux parties détachables **11, 15** est ou sont pourvue(s) d'une fente formant l'ouverture **14** d'une poche de propulsion. Ainsi, dans l'exemple illustré à la **Figure 4**, seule la paroi **21** de la première partie détachable **11** est équipée d'une ouverture **14**. Bien entendu, la deuxième paroi **22** de cette première partie détachable **11** peut être munie d'une ouverture **14** de sorte que cette première partie détachable **11** se trouve équipée de deux poches de propulsion **13** s'étendant sur les deux faces de l'emballage. De même, il est clair que la deuxième partie détachable **15** peut être réalisée de manière identique ou non aux différentes variantes énoncées ci-dessus.

Selon une autre forme de réalisation, pour laquelle une partie détachable est équipée de deux poches de propulsion **13**, il peut être prévu de réaliser ces deux poches **13** par l'intermédiaire de deux films en matière plastique souple soudées sur chacune des faces opposées de l'emballage, selon trois de ses côtés. Ces deux films sont rapportés sur une partie détachable réalisée par une unique paroi ou comme illustré à la **Figure 4,** par une double paroi **21, 22.** De même, il peut être envisagé de réaliser les deux poches **13** sur une même partie détachable telle que **15** dans l'exemple illustré à la **Figure 3**, à l'aide d'un film de matière plastique souple **25** replié autour du bord transversal libre de la partie détachable **15** en étant soudé au moins sur les deux bords longitudinaux des deux parois **21, 22.**

Il est à noter que dans l'exemple illustré à la **Figure 3**, le passage d'accès **8** est réalisé à proximité d'un bord transversal **6** du sac. A cet égard, le bord transversal **6** peut être muni d'un volet rabattable pré-encollé et protégé par une pellicule détachable pour constituer le moyen de fermeture de l'emballage. Bien entendu, le passage d'accès **8** réalisé à proximité d'un bord transversal **6** peut être obturé par une bande adhésive de sécurité.

Dans les exemples illustrés aux **Figures 1** à **4**, les perforations **10** sont aménagées dans les parois constitutives du sac **3** dont au moins une poche de propulsion **13** est réalisée dans une partie détachable **11, 15**.

Selon une autre variante de réalisation illustrée à la **Figure 5,** le sac **3** est pourvu des perforations **10** et d'au moins une poche de propulsion **13** telle que décrite ci-avant. La paroi constitutive de chacune des poches de propulsion **13** recouvre ainsi une partie seulement de la paroi constitutive du sac **3** de manière à permettre la pénétration du produit de maculage à l'intérieur du sac **3** grâce aux perforations **10.** Selon une forme de réalisation, il est à noter que des perforations **10** peuvent être également aménagées dans la paroi constitutive de la poche de propulsion **13** pour favoriser la pénétration du produit de maculage à l'intérieur du sac **3** pour les perforations aménagées dans la paroi constitutive du sac **3** et situées en dessous de la paroi constitutive de ladite poche.

Bien entendu, les perforations aménagées dans la poche de propulsion **13** sont réalisées de manière que cette dernière conserve sa fonction de déplacement de l'emballage grâce à l'air comprimé du réseau de transport. Selon une forme préférée de réalisation, au moins une perforation **10** est aménagée à partir d'au moins un bord longitudinal du sac **3** et éventuellement d'au moins un bord longitudinal de la poche de propulsion **13** de manière à favoriser la pénétration du produit de maculage à l'intérieur du sac **3** lorsque l'emballage se trouve positionné sur sa tranche, c'est à dire posé selon l'un de ses bords longitudinaux. De préférence, des perforations **10** sont aménagées à partir des deux bords longitudinaux du sac **3** de manière que l'emballage puisse être placé indifféremment sur l'un ou l'autre de ses bords tout en conservant sa capacité à favoriser la pénétration du produit de maculage. Bien entendu, les perforations **10** d'une manière générale peuvent présenter diverses sections, dimensions et répartitions pour autoriser la pénétration du produit de maculage à l'intérieur du sac **3**.

L'invention n'est pas limitée aux exemples décrits et représentés car diverses modifications peuvent y être apportées sans sortir de son cadre.

## Revendications

1. Emballage pour le transport d'articles à l'intérieur d'un réseau d'air comprimé, comportant un sac (**3**) réalisé en matière plastique souple soudée présentant un passage d'accès (**8**) à son volume interne fermé, obturable par un moyen de fermeture (**9**), l'emballage étant pourvu d'au moins une poche (**13**) réalisée en matière plastique souple et possédant une ouverture (**14**) s'étendant perpendiculairement à la direction de transport de l'emballage de manière à constituer une poche de propulsion de l'emballage par l'air comprimé du réseau, **caractérisé en ce qu'**il est pourvu de perforations (**10**) aménagées pour permettre le passage d'un produit de maculage des articles (**2**) placés à l'intérieur du sac.

2. Emballage selon la revendication 1, **caractérisé en ce que** le sac (**3**) est pourvu d'au moins d'une poche de propulsion (**13**), le sac et éventuellement la poche de propulsion étant pourvus des perforations (**10**).

3. Emballage selon la revendication 2, **caractérisé en ce qu'**au moins une perforation (**10**) est aménagée à partir d'au moins un bord longitudinal du sac et, éventuellement, de la poche de propulsion.

4. Emballage selon la revendication 1, **caractérisée en ce que** le sac est pourvu d'au moins une première partie détachable (**11**) réalisée en matière plastique souple et reliée à un bord transversal (**6**) du sac par une ligne de découpe (**12**), cette partie détachable (**11**) étant pourvue d'au moins une poche de propulsion (**13**).

5. Emballage selon la revendication 4, **caractérisé en ce que** le sac (**3**) est pourvu d'une deuxième partie détachable (**15**), réalisée en matière plastique souple, reliée par une ligne de découpe (**12**) à un bord transversal (**6**) du sac opposé de celui pourvu de la première partie détachable, cette deuxième partie détachable (**15**) étant pourvue d'au moins une poche de propulsion (**13**) dont l'ouverture (**14**) est en opposition par rapport à celle portée par la première partie détachable pour permettre la propulsion de l'emballage selon les deux sens du réseau.

6. Emballage selon la revendication 4 ou 5, **caractérisé en ce que** chaque partie détachable (**11, 15**) est pourvue d'une poche (**13**) située sur une même face ou sur les deux faces opposées de l'emballage.

7. Emballage selon la revendication 4 ou 5, **caractérisé en ce que** chaque partie détachable (**11, 15**) est pourvue de deux poches de propulsion (**13**) situées sur les deux faces opposées de l'emballage.

8. Emballage selon l'une des revendications 4 à 7, **caractérisé en ce que** chaque partie détachable (**11, 15**) comporte deux parois superposées (**21, 22**) fermées sur leurs quatre côtés.

9. Emballage selon la revendication 8, **caractérisé en ce que** l'une ou les deux parois (**21, 22**) de la ou des parties détachables est (sont) pourvue(s) d'une fente formant l'ouverture (**14**) de la poche de propulsion (**13**).

10. Emballage selon la revendication 8, **caractérisé en ce que** l'une ou les deux parois (**21, 22**) de la ou des parties détachables est pourvue d'un film de matière plastique souple soudé aux bords longitudinaux et au bord transversal libre de la partie détachable pour constituer une poche de propulsion.

11. Emballage selon la revendication 8, **caractérisé en ce que** les deux parois (**21, 22**) de la ou des parties détachables (**11, 15**) sont pourvues d'un film de matière plastique souple (**25**) replié autour du bord transversal libre des parois en étant soudé au moins sur les bords longitudinaux des parois pour constituer deux poches de propulsion (**13**).

12. Emballage selon l'une des revendications 4 à 7, **caractérisé en ce qu'**au moins une partie détachable (**11, 15**) comporte une paroi (**20**) réalisée par un film en matière plastique souple.

13. Emballage selon la revendication 12, **caractérisé en ce que** l'une ou les deux faces de la paroi (**20**) constitutive de la ou des parties détachables est (sont) pourvue(s) d'un film de matière plastique souple soudé aux bords longitudinaux et au bord transversal libre de la paroi pour constituer une poche de propulsion.

14. Emballage selon la revendication 12, **caractérisé en ce que** les deux faces de la paroi (**20**) constitutive de la ou des parties détachables (**11, 15**) sont pourvues d'un film de matière plastique souple replié autour du bord transversal libre de la paroi en étant soudé au moins sur les bords longitudinaux de la paroi pour constituer deux poches de propulsion (**13**).

15. Emballage selon l'une des revendications 1 à 14, **caractérisé en ce que** chaque poche de propulsion (**13**) présente au moins un soufflet élargissant son ouverture lors de la propulsion par l'air.

## Claims

1. Packaging for the transport of articles inside a compressed air network comprising a bag (3) made from a welded flexible plastic material with an access passage (8) to its closed internal volume, that can be closed off by a closing means (9), the packaging being provided with at least one pocket (13) made from flexible plastic material and with an opening (14) extending perpendicular to the transport direction of the packaging so as to form a propulsion pocket of the packaging by compressed air in the network, **characterised in that** it is provided with perforations (10) arranged to enable the passage of a product for staining articles (2) placed inside the bag.

2. Packaging according to claim 1, **characterised in that** the bag (3) is provided with at least one propulsion pocket (13), perforations (10) being formed in the bag and possibly in the propulsion pocket.

3. Packaging according to claim 2, **characterised in that** at least one perforation (10) is formed starting from at least one longitudinal edge of the bag and possibly the propulsion pocket.

4. Packaging according to claim 1, **characterised in that** the bag is provided with at least a first detachable part (11) made from flexible plastic material and connected to a transverse edge (6) of the bag by a cut line (12), this detachable part (11) being provided with at least one propulsion pocket (13.

5. Packaging according to claim 4, **characterised in that** the bag (3) is provided with a second detachable part (15) made from flexible plastic material connected through a cut line (12) to a transverse edge (6) of the bag opposite the edge on the first detachable part, this second detachable part (15) being provided with at least one propulsion pocket (13), that opens (14) at the end opposite to that on the first detachable part to enable propulsion of the packaging in both directions along the network.

6. Packaging according to claim 4 or 5, **characterised in that** each detachable part (11, 15) is provided with a pocket (13) located on the same face or on the two opposite faces of the packaging.

7. Packaging according to claim 4 or 5, **characterised in that** each detachable part (11, 15) is provided with two propulsion pockets (13) located on the two opposite faces of the packaging.

8. Packaging according to any one of claims 4 to 7, **characterised in that** each detachable part (11, 15) comprises two superposed walls (21, 22) closed on their four sides.

9. Packaging according to claim 8, **characterised in that** one or both of the walls (21, 22) of the detachable part(s) is (are) provided with a slit forming the opening (14) in the propulsion pocket (13).

10. Packaging according to claim 8, **characterised in that** one or both of the walls (21, 22) of the detachable part(s) is (are) provided with a film of a flexible plastic material welded to the longitudinal edges and to the free transverse edge of the detachable part to form a propulsion pocket.

11. Packaging according to claim 8, **characterised in that** the two walls (21, 22) of the detachable part(s) (11, 15) is (are) provided with a film of flexible plastic material (25) folded around the free transverse edge of the walls, being welded at least onto the longitudinal edges of the walls to form two propulsion pockets (13).

12. Packaging according to one of claims 4 to 7, **characterised in that** one detachable part (11, 15) comprises a wall (20) made from a film made from a flexible plastic material.

13. Packaging according to claim 12, **characterised in that** one or both faces of the wall (20) making up the detachable part(s) is (are) provided with a film of flexible plastic material welded to the longitudinal edges and to the free transverse edge of the wall to form a propulsion pocket.

14. Packaging according to claim 12, **characterised in that** the two faces of the wall (20) from which the detachable part(s) (11, 15) is (are) made are provided with a film of flexible plastic material folded around the free transverse edge of the wall, being welded at least onto the longitudinal edges of the wall to form two propulsion pockets (13).

15. Packaging according to one of claims 1, 14, **characterised in that** each propulsion pocket (13) has at least one bellows that increases the size of its opening during propulsion by air.

## Patentansprüche

1. Verpackung zum Transportieren von Gegenständen innerhalb eines Netzwerkes komprimierter Luft, umfassend eine Tüte (3), die aus geschweißtem, flexiblem Kunststoffmaterial ausgebildet ist und die einen Zugangsdurchgang (8) zu ihrem geschlossenen internen Volumen aufweist, welcher durch Schließmittel (9) verschließbar ist, wobei die Verpackung mit mindestens einer Tasche (13) versehen ist, die aus flexiblem Kunststoffmaterial ausgebildet ist und die eine Öffnung (14) aufweist, die sich senkrecht zur Transportrichtung der Verpackung erstreckt, um eine Tasche zum Vortrieb der Verpackung durch die komprimierte Luft des Netzwerkes zu bilden, **dadurch gekennzeichnet, daß** sie mit Perforationen (10) versehen ist, die eingerichtet sind, um den Durchgang eines Produktes zum Beflecken der Artikel (2), die innerhalb der Tüte angeordnet sind, zu erlauben.

2. Verpackung nach Anspruch 1, **dadurch gekennzeichnet, daß** die Tüte (3) mit mindestens einer Tasche zum Vortrieb (13) versehen ist, wobei die Tüte und gegebenenfalls die Tasche zum Vortrieb mit Perforationen (10) versehen sind.

3. Verpackung nach Anspruch 2, **dadurch gekennzeichnet, daß** mindestens eine Perforation (10) ab mindestens einer Längskante der Tüte und gegebenenfalls ab der Tasche ausgebildet ist.

4. Verpackung nach Anspruch 1, **dadurch gekennzeichnet, daß** die Tüte mit mindestens einem ersten abnehmbaren Teil (11) versehen ist, der aus flexiblem Kunststoffmaterial ausgebildet ist und der mit einer Querkante (6) der Tüte durch eine Schnittlinie (12) verbunden ist, wobei dieser abnehmbare Teil (11) mit mindestens einer Tasche zum Vortrieb (13) versehen ist.

5. Verpackung nach Anspruch 4, **dadurch gekennzeichnet, daß** die Tüte (3) mit einem zweiten abnehmbaren Teil (15) versehen ist, der aus flexiblem Kunststoffmaterial ausgebildet ist und der mit einer Querkante (6) der Tüte, die gegenüberliegend ist in Bezug auf die Kante, die mit dem ersten abnehmbaren Teil versehen ist, durch eine Schnittlinie (12) verbunden ist, wobei dieser zweite abnehmbare Teil (15) mit mindestens einer Tasche zum Vortrieb (13) versehen ist, deren Öffnung (14) gegenüberliegend ist in Bezug auf die von dem ersten abnehmbaren Teil getragene Öffnung, um den Antrieb der Verpackung gemäß den beiden Richtungen des Netzwerkes zu erlauben.

6. Verpackung nach einem der Ansprüche 4 oder 5, **dadurch gekennzeichnet, daß** jeder abnehmbare Teil (11, 15) mit einer Tasche (13) versehen ist, die an einer selben Seite oder an den beiden gegenüberliegenden Seiten der Verpackung angeordnet ist.

7. Verpackung nach einem der Ansprüche 4 oder 5, **dadurch gekennzeichnet, daß** jeder abnehmbare Teil (11, 15) mit zwei Taschen zum Vortrieb (13) versehen ist, die an den zwei gegenüberliegenden Seiten der Verpackung angeordnet sind.

8. Verpackung nach einem der Ansprüche 4 bis 7, **dadurch gekennzeichnet, daß** jeder abnehmbare Teil (11, 15) zwei übereinander liegende Wände (21, 22) umfaßt, die an ihren vier Kanten geschlossen sind.

9. Verpackung nach Anspruch 8, **dadurch gekennzeichnet, daß** eine Wand oder beide Wände (21, 22) des abnehmbaren Teils oder der abnehmbaren Teile mit einem Schlitz oder Schlitzen versehen ist/sind, die die Öffnung (14) der Tasche zum Vortrieb (13) bilden.

10. Verpackung nach Anspruch 8, **dadurch gekennzeichnet, daß** die eine oder die beiden Wände (21, 22) des abnehmbaren Teils oder der abnehmbaren Teile mit einer Folie aus flexiblem Kunststoffmaterial versehen ist/sind, die an die Längskanten und an der freien Querkante des abnehmbaren Teils geschweißt sind, um eine Tasche zum Vortrieb zu bilden.

11. Verpackung nach Anspruch 8, **dadurch gekennzeichnet, daß** die beiden Wände (21, 22) des abnehmbaren Teils oder der abnehmbaren Teile mit einer Folie aus flexiblem Kunststoffmaterial (25) versehen sind, der um die freie Querkante der Wände gefaltet ist, wobei sie mindestens an die Längskanten der Wände geschweißt ist, um zwei Taschen zum Vortrieb (13) zu bilden.

12. Verpackung nach einem der Ansprüche 4 bis 7, **dadurch gekennzeichnet, daß** mindestens ein abnehmbarer Teil (11, 15) eine Wand (20) umfaßt, die aus einer Folie aus flexiblem Kunststoffmaterial ausgebildet ist.

13. Verpackung nach Anspruch 12, **dadurch gekennzeichnet, daß** die eine oder die zwei Seiten der Wand (20), die den oder die abnehmbaren Teil(e) bilden, mit einer Folie aus flexiblem Kunststoffmaterial versehen ist/sind, die an den Längskanten und an der freien Querkante der Wand geschweißt ist, um eine Tasche zum Vortrieb zu bilden.

14. Verpackung nach Anspruch 12, **dadurch gekennzeichnet, daß** die zwei Seiten der Wand (20), die den oder die abnehmbaren Teil(e) (11, 15) bilden, mit einer Folie aus flexiblem Kunststoffmaterial versehen sind, der um die freie Querkante der Wand gefaltet ist, wobei sie mindestens an den Längskanten der Wand geschweißt ist, um zwei Taschen zum Vortrieb (13) zu bilden.

15. Verpackung nach einem der Ansprüche 1 bis 14, **dadurch gekennzeichnet, daß** jede Tasche zum Vortrieb (13) mindestens einen Blasebalg aufweist, der ihre Öffnung während des Vortriebs durch Luft verbreitert.
